# EUROPEAN PATENT APPLICATION

(11) **EP 2 490 143 A1**
(43) Date of publication of application: **22.08.2012**
(21) Application number: 11305132.0
(22) Date of filing: 10.02.2011
(51) Int. Cl.: G06F 21/00

(54) **Method and device for controlling distribution of licenses**

(71) Applicant: Thomson Licensing, 92130 Issy-les-Moulineaux (FR)
(72) Inventor: Monsifrot, Antoine, 35510 Cesson Sevigne (FR); Doerr, Gwenael, 35510 Cesson Sevigne (FR); Courtay, Olivier, 35510 Cesson Sevigne (FR); Robert, Antoine, 35510 Cesson Sevigne (FR); Joye, Marc, 35510 Cesson Sevigne (FR)
(74) Representative: Ruellan-Lemonnier, Brigitte

(57) **Abstract**

A method for controlling distribution of licenses (251; 351), a license being for an excerpt (252; 352) of a content item (211; 311), the content item comprising a set (100) of continuous units (110), each excerpt (252; 352) comprising a subset of the set (100) of continuous units. A device (230; 340) receives an identifier of a receiver (230; 330) of a license, and the license (251) or a request (322) to generate the license (351), the license or the request (322) to generate the license (351) comprising a content identifier and at least one indicator of the units covered by the license (251; 351); retrieves stored information regarding licenses previously delivered to the receiver; compares a limit value for the content item with the stored information combined with information from the license or the request (322) to generate the license (351); and allows the receiver access to the license only if the limit value is not exceeded by the stored information combined with information from the license or the request (322) to generate the license (351). Also provided is the device (230; 340).

## Description

### TECHNICAL FIELD

The present invention relates generally to Digital Rights Management (DRM), and more particularly to a DRM solution that controls user distribution of excerpts of a content item.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

DRM solution are often considered as user unfriendly, a common complaint being that DRMs prohibit fair use as defined by the Digital Millennium Copyright Act, 1998 [see http://www.copyright.gov/legislation/dmca.pdf]. Among the many things considered as part of fair use is the right of an end user to cite or use an excerpt of a work, i.e. content item, for criticism, scholarship and so on. This is however not possible with the prior art DRM solutions.

It will therefore be appreciated that there is a need for a DRM solution that can:
- Protect a content item against illegal or unauthorized use.
- Allow an end user to extract a portion of the content item and redistribute the portion to other end users who may then access the portion, regardless of whether or not these end users have access rights to the entire content item.
- Make it difficult for colluding end users to distribute an entire work freely by concatenating a set of excerpts of the work.

The present invention provides a part of such a solution: to wit, it provides the anti-collusion part.

### SUMMARY OF INVENTION

In a first aspect, the invention is directed to a method for controlling distribution of licenses, a license being for an excerpt of a content item that comprises a set of continuous units, each excerpt comprising a subset of the set of continuous units. A device receives an identifier of a receiver of a license, and the license or a request to generate the license. The license or the request to generate the license comprises a content identifier and at least one indicator of the units covered by the license. Stored information regarding licenses previously delivered to the receiver is retrieved; a limit value for the content item is compared with the stored information combined with information from the license or the request to generate the license. The receiver is allowed access to the license only if the limit value is not exceeded by the stored information combined with information from the license or the request to generate the license.

In a first preferred embodiment, the stored information comprises the number of units covered by licenses previously delivered to the receiver and the information from the license or the request to generate the license comprises a number of units covered by the license.

In a second preferred embodiment, the stored information comprises the number of licenses previously delivered to the receiver and the information from the license or the request to generate the license equals one.

In a third preferred embodiment, the device is the receiver of the license.

In a fourth preferred embodiment, the device is a controller device separate from a sender and the receiver. It is advantageous that the device receives the request to generate the license and that, if the receiver is allowed access to the license, the license is generates and transmitted to the receiver. The request to generate the license may be received from the sender or from the receiver. It is alternatively advantageous that the device receives a license request from the sender and, if the receiver is allowed access to the license, returns to the sender a permission to generate and transmit the license. It is also alternatively advantageous that the device receives an encrypted license and, if the receiver is allowed access to the license, decrypts the encrypted license and transmits the license to the sender.

In a second aspect, the invention is directed to a device for controlling distribution of licenses, a license being for an excerpt of a content item, the content item comprising a set of continuous units, each excerpt comprising a subset of the set of continuous units. The device comprises a processor adapted to receive an identifier of a receiver of a license, and the license or a request to generate the license, the license or the request to generate the license comprising a content identifier and at least one indicator of the units covered by the license; retrieve stored information regarding licenses previously delivered to the receiver; compare a limit value for the content item with the stored information combined with information from the license or the request to generate the license; and allow the receiver access to the license only if the limit value is not exceeded by the stored information combined with information from the license or the request to generate the license.

In a first preferred embodiment, the device is the receiver of the license.

In a second preferred embodiment, the device is a controller device separate from a sender and the receiver.

In a third preferred embodiment, the processor is further adapted to receive the request to generate the license and, if the receiver is allowed access to the license, to generate and transmit the license to the receiver.

In a fourth preferred embodiment, the processor is further adapted to receive an encrypted license and, if the receiver is allowed access to the license, to: decrypt the encrypted license; and transmit the license to the sender.

### BRIEF DESCRIPTION OF DRAWINGS

Preferred features of the present invention will now be described, by way of non-limiting example, with reference to the accompanying drawings, in which
Figure 1 illustrates content divided into a plurality of units;
Figure 2 illustrates a system according to a preferred embodiment of a decentralised approach of the present invention; and
Figure 3 illustrates a system according to a preferred embodiment of a centralised approach of the present invention.

### DESCRIPTION OF EMBODIMENTS

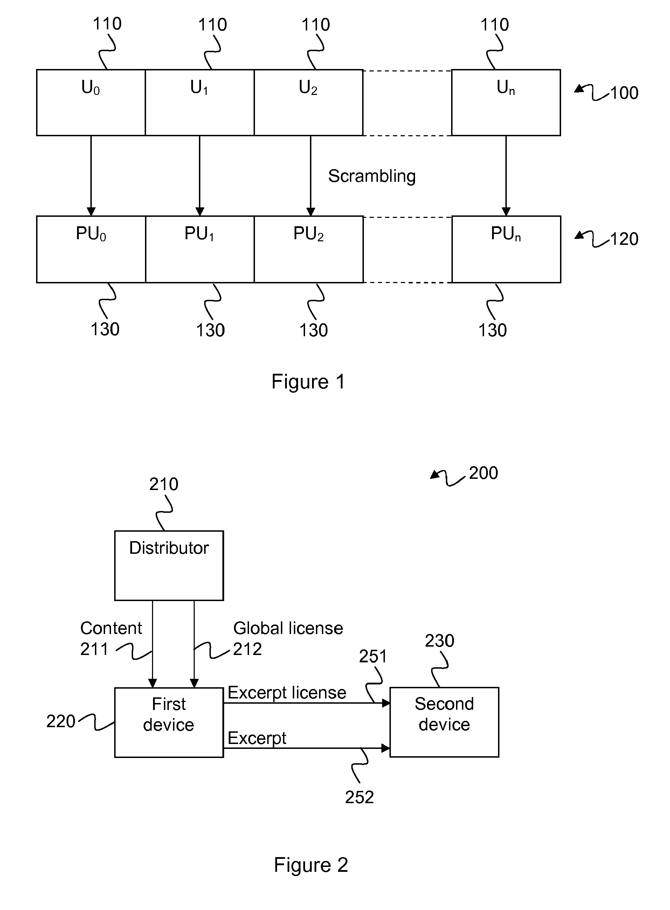

A co-pending application teaches a DRM solution, illustrated in Figure 1, in which an item of content 100 is partitioned into a set of sequential sequences called 'units' 110, each unit being identified by a unit index (j). The content 100 thus comprises the set of units {U₀, U₁, U₂,..., Uₙ}. For delivery to an end user, the units are scrambled separately, a distinct control word (CW) being used for each unit. The resulting protected units 130 form a protected content 120. The CWs are generated from a master CW that is comprised in a (global) content license that also is delivered to the end user.

The (first) end user may select a number of units to be sent to a second end user, generate the distinct CWs for the selected units and send the selected, protected units and an excerpt license comprising the generated, distinct CWs to the second end user. The use of a suitable CW generation algorithm ensures that the second user cannot generate CWs for other parts of the content than the parts of the excerpt. The selected number of units 110 make up a subset (or portion) of the content item 100; the subset is not necessarily contiguous, i.e. an excerpt license may be generated for units belonging to two or more separate parts such as for example U₀-U₃₀₀ and U₅₀₀-U₇₀₀. This can enable generation of an excerpt license for the goals of a football match or the like.

However, it is conceivable that the first end user, or several end users, sends a plurality of excerpts to the second end user, thereby enabling the second end user to access the entire content item (or a major part thereof). The present invention seeks to overcome this problem.

An object of the present invention is thus to ensure that there is a limit to the amount of a content item that a device can access (i.e. render) through excerpt licenses. There are at least two possible solutions: a decentralised approach and a centralised approach.

### Decentralised approach

Figure 2 illustrates a system according to a preferred embodiment of the decentralised approach of the present invention. The system 200 comprises a distributor 210, a first device 220, and a second device 230.

The distributor 210 is adapted to protect and distribute a content item 211 and the corresponding global content license 212 to a first device 220, as described hereinbefore with reference to Figure 1.

The first device 220 is adapted to select, following instructions from the first end user, an excerpt of the content 252 and to send the excerpt with a corresponding excerpt license 251 to the second device 230.

The second device 230 is adapted to receive, from the first end user device, the excerpt of the content 252 and the corresponding excerpt license 251. If authorized to do so, the second device 230 is able to render the content of the excerpt 252.

When the first device 220 has received instructions to send an excerpt 252 to the second device 230, it generates the excerpt license 251, as previously described herein, and sends the excerpt license 251 to the second device 230. It is advantageous that the excerpt 252 is sent as well, but it should be appreciated that the excerpt 252 may also be received (possibly as part of a bigger excerpt or indeed the entire content item) by the second device 230 from a different source (or sources) provided that the excerpt license comprises sufficient information to allow the second device 230 to identify the units for which the excerpt license 251 comprises control words.

The excerpt license 251 preferably comprises an identifier of the content item, a list of pairs {unit index; CW}, and an integrity checksum. The first device 220 preferably encrypts the excerpt license 251 with a public key of the second device 230.

Upon reception of the excerpt license 251, the second device 230 decrypts it using its private key, if necessary, and checks the integrity of the excerpt license 251 using the integrity checksum. If the integrity is verified, then the second device 230 verifies if accessing the excerpt would bring it above the authorized limit for the content item. The limit may for example be expressed as a number of units and/or as a number of excerpts. To verify this, the second device 230 retrieves a stored counter (of e.g. the number of accessed units and/or excerpts) for the content identifier, adjusts the counter value with the relevant number from the received excerpt license (e.g. the number of units) and checks if the adjusted counter value exceeds a threshold value. If this is the case, then the second device 230 is not authorized to access the excerpt and advantageously erases the excerpt license (and possibly the excerpt). However, if the threshold is not exceeded, then the second device 230 updates the counter value and uses the excerpt license 252 to access the content of the excerpt 252.

The second device 230 comprises at least one processor (not shown) adapted to perform the necessary calculations and memory (also not shown) for storing a database with content identifiers and corresponding counter values. In a variant embodiment, the memory stores the index values of the units that it has already accessed, which allows the second device 230 to receive the same unit twice while it is only counted as one unit for purposes of the counter value.

### Centralised approach

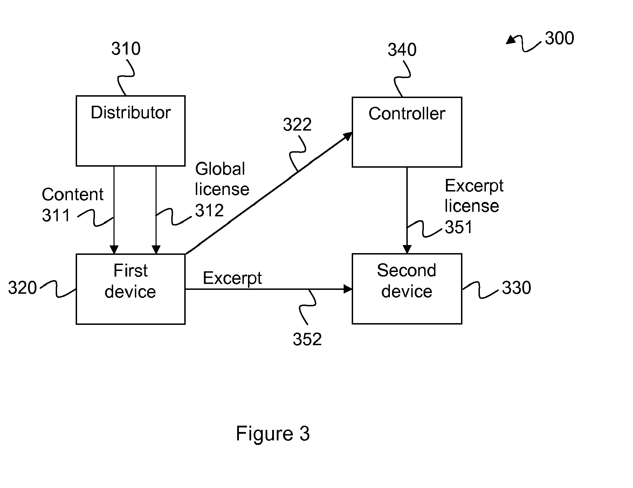

Figure 3 illustrates a system according to a preferred embodiment of the centralised approach of the present invention. The system 300 comprises a distributor 310, a first device 320, a second device 330, and a central excerpt controller 340.

The distributor 310 is adapted to protect and distribute a content item 311 and the corresponding global content license 312 to a first end user, as described hereinbefore with reference to Figures 1 and 2. The distributor 310 can also provide the central excerpt controller 340 with information, such as the master CW, that enables generation of an excerpt license.

The first device 320 is adapted to select an excerpt 352 of the content that is to be sent with a corresponding excerpt license to the second end user. As in the decentralized approach, the excerpt 352 may be obtained by the second device 330 from other sources than the first device 320, provided that the excerpt license comprises enough information to identify the units for which the excerpt license comprises control words.

However, in the centralized approach, the excerpt license may be delivered to the second device 330 in a number of different ways.

In a first variant, illustrated in Figure 3, the first device 320 sends a license request 322 to the central excerpt controller 340. The license request 322 comprises the identity of the second device 330 (preferably in a certificate that further comprises the public key of the second device 330), a content identifier, a list of unit indices to be included in the excerpt license, and an integrity checksum. The license request 322 may, but is not necessarily protected by, for example, encryption.

The central excerpt controller 340, which stores a record database for each managed device, verifies that the units of the excerpt will not bring the number of units (and/or excerpts) received by the second device 330 above a maximum authorized number of units (or excerpts) for the second device 330. The database preferably comprises, for each device therein, a list of content identifiers and, for each content identifier, the units that have been delivered to the receiving device.

If the maximum number is reached, then the license request is refused; otherwise, the central excerpt controller 340 generates an excerpt license 351 and delivers this to the second device 330. The excerpt license 351 preferably comprises the content identifier, a list of {index; CW} pairs, and an integrity checksum. The excerpt license is preferably encrypted using the public key of the second device 330. The central excerpt controller 340 also updates its database with the information in the generated excerpt license 351.

In a second variant, it is the second device 330 that sends the license request to the central excerpt controller 340.

In the first and second variants, the central excerpt controller 340 may obtain the control words in at least one of the following ways. First, the central excerpt controller 340 may implement the CW generation algorithm and use the master CW to generate the unit CWs. Second, the central excerpt controller 340 may receive and store a complete list of unit CWs from the distributor 310.

In a third variant, the first device 320 sends a license request 322 to the central excerpt controller 340 that verifies whether the second device 330 is authorized to receive the excerpt license, as in the first variant. If the second device 330 is authorized, then the central excerpt controller 340 returns an authorization to the first device 320 that then may generate the excerpt license and send it to the second device 330.

In a fourth variant, the first device 320 encrypts the excerpt license with the public key of the central excerpt controller 340. Upon reception of the excerpt license, the second device 330 sends the excerpt license to the central excerpt controller 340, possibly together with its own public key. The central excerpt controller 340 decrypts the excerpt license and verifies if the second device 330 is authorized to access the excerpt. If this is the case, then the central excerpt controller 340 encrypts the excerpt license with the public key of the second device 330 and returns the re-encrypted excerpt license.

Upon reception of the excerpt license 351, the second device 330 preferably decrypts it, using its private key, checks the validity of the integrity checksum. If the checksum is correct, then the CWs in the excerpt license 351 may be used to descramble and then render the excerpt.

It will be appreciated that the present invention can enable sharing of portions of a protected content, without making the entire content available to the recipient.

Each feature disclosed in the description and (where appropriate) the claims and drawings may be provided independently or in any appropriate combination. Reference numerals appearing in the claims are by way of illustration only and shall have no limiting effect on the scope of the claims.

## Claims

1. A method for controlling distribution of licenses (251; 351), a license being for an excerpt (252; 352) of a content item (211; 311), the content item comprising a set (100) of continuous units (110), each excerpt (252; 352) comprising a subset of the set (100) of continuous units, the method comprising the steps at a device (230; 340) of:
- receiving an identifier of a receiver (230; 330) of a license, and the license (251) or a request (322) to generate the license (351), the license or the request (322) to generate the license (351) comprising a content identifier and at least one indicator of the units covered by the license (251; 351);
- retrieving stored information regarding licenses previously delivered to the receiver;
- comparing a limit value for the content item with the stored information combined with information from the license or the request (322) to generate the license (351); and
- allowing the receiver access to the license only if the limit value is not exceeded by the stored information combined with information from the license or the request (322) to generate the license (351).

2. The method of claim 1, wherein the stored information comprises the number of units covered by licenses previously delivered to the receiver and the information from the license or the request (322) to generate the license (351) comprises a number of units covered by the license.

3. The method of claim 1, wherein the stored information comprises the number of licenses previously delivered to the receiver and the information from the license or the request (322) to generate the license (351) equals one.

4. The method of claim 1, wherein the device (230; 340) is the receiver (230) of the license.

5. The method of claim 1, wherein the device (230; 340) is a controller device (340) separate from a sender (320) and the receiver (330).

6. The method of claim 5, wherein the device receives the request (322) to generate the license and wherein the method further comprises the steps, if the receiver is allowed access to the license, of:
- generating the license; and
- transmitting the license to the receiver.

7. The method of claim 6, wherein the request (322) to generate the license is received from the sender.

8. The method of claim 6, wherein the request (322) to generate the license is received from the receiver.

9. The method of claim 5, wherein the device receives a license request from the sender and wherein the method further comprises the steps, if the receiver is allowed access to the license, of:
- returning to the sender a permission to generate and transmit the license.

10. The method of claim 5, wherein the device receives an encrypted license and wherein the method further comprises the steps, if the receiver is allowed access to the license, of:
- decrypting the encrypted license; and
- transmitting the license to the sender.

11. A device for controlling distribution of licenses (251; 351), a license being for an excerpt (252; 352) of a content item (211; 311), the content item comprising a set (100) of continuous units (110), each excerpt (252; 352) comprising a subset of the set (100) of continuous units, the device (230; 340) comprising a processor adapted to:
- receive an identifier of a receiver (230; 330) of a license, and the license (251) or a request (322) to generate the license (351), the license or the request (322) to generate the license (351) comprising a content identifier and at least one indicator of the units covered by the license (251; 351);
- retrieve stored information regarding licenses previously delivered to the receiver;
- compare a limit value for the content item with the stored information combined with information from the license or the request (322) to generate the license (351); and
- allow the receiver access to the license only if the limit value is not exceeded by the stored information combined with information from the license or the request (322) to generate the license (351).

12. The device of claim 11, wherein the device (230; 340) is the receiver (230) of the license.

13. The device of claim 11, wherein the device (230; 340) is a controller device (340) separate from a sender (320) and the receiver (330).

14. The device of claim 11, wherein the processor is further adapted to receive the request (322) to generate the license and, if the receiver is allowed access to the license, to:
- generate the license; and
- transmit the license to the receiver.

15. The device of claim 11, wherein the processor is further adapted to receive an encrypted license and, if the receiver is allowed access to the license, to:
- decrypt the encrypted license; and
- transmit the license to the sender.
